# EUROPÄISCHE PATENTSCHRIFT

(11) **EP 3 890 305 B1**
(45) Veröffentlichungstag und Bekanntmachung des Hinweises auf die Patenterteilung: **04.05.2022**
(21) Anmeldenummer: 20167184.9
(22) Anmeldetag: 31.03.2020
(51) Int. Cl.: H04N 5/232, H04N 5/247, H04N 13/282, H04N 7/00, H04N 5/225, H04N 5/235, H04N 7/18, H04N 17/00, G06K 7/10

(54) **AUTOMATISCHE KONFIGURATION EINER VIELZAHL VON KAMERAS**
AUTOMATIC CONFIGURATION OF A PLURALITY OF CAMERAS
CONFIGURATION AUTOMATIQUE D'UNE PLURALITÉ DE CAMÉRAS

(43) Veröffentlichungstag der Anmeldung: 06.10.2021
(73) Patentinhaber: SICK AG, 79183 Waldkirch (DE)
(72) Erfinder: Lauer, Roman, 79111 Freiburg (DE)

(56) Entgegenhaltungen:
- EP-A1- 2 950 285
- GB-A- 2 444 399
- US-B1- 9 230 326

## Beschreibung

Die Erfindung betrifft ein Verfahren zur automatischen Konfiguration einer Vielzahl von Kameras und ein Multikamerasystem nach dem Oberbegriff von Anspruch 1 beziehungsweise 15.

Zur Automatisierung von Vorgängen an einem Förderband werden Sensoren eingesetzt, um Objekteigenschaften der geförderten Objekte zu erfassen und in Abhängigkeit davon weitere Bearbeitungsschritte einzuleiten. In der Logistikautomation besteht die Bearbeitung typischerweise in einer Sortierung, etwa bei der automatischen Paketidentifikation, für Postsendungen oder die Gepäckabfertigung in Flughäfen. Neben allgemeinen Informationen, wie Volumen und Gewicht der Objekte, dient als wichtigste Informationsquelle häufig ein an dem Objekt angebrachter optischer Code. In anderen Fällen geht es um eine Inspektion oder Qualitätsprüfung, an der ein optischer Code beteiligt sein kann, aber nicht muss.

Mit der Weiterentwicklung der digitalen Kameratechnologie werden zum Codelesen zunehmend kamerabasierte Codeleser eingesetzt. Statt Codebereiche wie in einem Barcodescanner abzuscannen, nimmt ein kamerabasierter Codeleser mit Hilfe eines pixelaufgelösten Bildsensors Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. In einer wichtigen Anwendungsgruppe werden die Code tragenden Objekte an dem Codeleser vorbei gefördert. Eine Kamera liest die Objektbilder mit den Codeinformationen sukzessive mit der Relativbewegung ein.

Eine einzelne Kamera reicht oft nicht aus, um sämtliche relevanten Informationen über die Objekte auf einem Förderband aufzunehmen. Deshalb werden mehrere Kameras in einem Lesesystem oder Lesetunnel zusammengefasst. Liegen zur Erhöhung des Objektdurchsatzes mehrere Förderbänder nebeneinander, oder wird ein verbreitertes Förderband verwendet, so ergänzen sich mehrere Kameras in ihren an sich zu schmalen Sichtfeldern gegenseitig, um die gesamte Breite abzudecken. Außerdem werden Kameras in unterschiedlichen Perspektiven montiert, um Codes von allen Seiten aufzunehmen (Omni-Lesung).

Bei einer Vielzahl beteiligter Kameras wird die Inbetriebnahme sehr aufwändig, da jede Kamera zumindest teilweise von Hand konfiguriert werden muss. Bereits eine grundlegende Einstellung der Kommunikationsparameter, um die Kameras in einer gewünschten und übersichtlichen Weise ein Netzwerk einzubinden, bedarf eines erheblichen Zeitaufwands, und zudem müssen die einzelnen Kameras noch entsprechend ihrer Position und Perspektive parametriert werden.

Ein herkömmliches Vorgehen beginnt damit, dass die Kameras vor Auslieferung vorbereitet werden. Sie müssen dazu einzeln ausgepackt, gebootet und an einen Konfigurationsrechner angeschlossen werden, um ihnen Parameter entsprechend ihrer geplanten Position innerhalb der Kameraanordnung vorzugeben, und anschließend werden sie wieder verpackt und entsprechend beschriftet. Am Betriebsort werden die Kameras dann entsprechend den Beschriftungen montiert, angeschlossen und eingeschaltet. In einem gemeinsamen Steuerungsrechner werden die angeschlossenen Kameras mittels Geräteerkennung zu einem Netzwerk verbunden. Von Hand wird für jede einzelne Kamera in Abhängigkeit ihrer Position ein Gerätename und eine Netzwerkkonfiguration eingestellt. Auch das Netzwerk als solches muss konfiguriert werden.

Die einzelnen Kameras durchlaufen dann noch ein eigenes Setup, das teilweise beispielsweise zur Kalibrierung automatisch abläuft, aber auch händische Parametrierung verlangt. Eine besondere Herausforderung stellen dabei Systemparameter, die über die Kameras hinweg konsistent eingestellt sein müssen. Das aber liegt in der Verantwortung des Servicetechnikers. Zwar gibt es eine Funktion, um den Wert eines bei einer Kamera eingestellten Parameters auf die anderen Kameras zu überspielen. Der Servicetechniker muss diese Funktion jedoch jeweils auslösen und dafür entscheiden, wann und für welche Parameter das erforderlich ist. Da alle Kameras nacheinander konfiguriert und womöglich anschließend im Rahmen einer Optimierung erneut nachparametriert werden, geht der Überblick schnell verloren.

Die bisherige Konfiguration ist demnach umständlich, zeitraubend und fehleranfällig. Durch die vielen manuellen Schritte gibt es auch keine Konsistenz über verschiedene Systeme hinweg, beispielsweise hinsichtlich der Namensgebung. Ein Servicetechniker, der eine Wartung an einem nicht von ihm aufgesetzten System vornimmt, findet sich daher womöglich nicht oder jedenfalls nicht sofort zurecht. Eine konsistente Parametrierung über die Kameras hinweg ist nicht gewährleistet und verlässt sich jedenfalls in hohem Maße auf die Kenntnisse und Konzentrationsfähigkeit des Servicetechnikers.

GB 2 444 399 A beschreibt ein modulares Kamerasystem zum Scannen von Barcodes von Teilen, die auf einem Laufband fortbewegt werden. Die Kameras enthalten eine Netzwerkschnittstelle und eine Beleuchtungseinheit.

US 9 230 326 B1 zeigt die Kalibrierung eines Kamerasystems basierend auf Aufnahmen eines Kalibriermusters. Allen Kameras des Systems wird somit eine Koordinate und Blickrichtung in einem gemeinsamen Koordinatensystem zugeordnet.

Es ist daher Aufgabe der Erfindung, die Konfiguration eines Systems mit einer Vielzahl von Kameras zu vereinfachen.

Diese Aufgabe wird durch ein Verfahren zur automatischen Konfiguration einer Vielzahl von Kameras und ein Multikamerasystem nach Anspruch 1 beziehungsweise 15 gelöst. Die Kameras weisen jeweils einen Bildsensor für die Bildaufnahme, eine Steuer- und Auswertungseinheit für interne Einstellungen und Verarbeitungen, eine Beleuchtung zum Ausleuchten des eigenen Sichtfelds sowie eine Kommunikationsschnittstelle für Anschluss an weitere Kameras und/oder eine übergeordnete Steuerung auf. Die Sichtfelder der einzelnen Kameras ergänzen einander teilüberlappend durch Anordnung und Perspektive der jeweiligen Kameras zu einem gemeinsamen Erfassungsbereich. Dort werden Objekte aufgenommen, vorzugsweise ein Objektstrom von Objekten, die von einer Fördereinrichtung, an der die Kameras montiert sind, durch den Erfassungsbereich gefördert werden. Über ihre Kommunikationsschnittstellen sind die Kameras zu einem Netzwerk verbunden. Das ist zunächst nur eine physische Verbindung, die logische Verbindung ist ein Ergebnis der Konfiguration.

Die Erfindung geht von dem Grundgedanken aus, das die Kameras eigenständig herausfinden, in welcher relativen Anordnung sie sich zueinander befinden. Diese Information wird genutzt, um das Gesamtsystem automatisch richtig zu konfigurieren. Bestimmte Kameras aktivieren selektiv ihre Beleuchtung, und anhand von Probeaufnahmen stellen die Kameras fest, ob sie diese Beleuchtung wahrnehmen und somit in einer Nachbarschaftsbeziehung zu der Kamera oder den Kameras mit aktuell aktiver Beleuchtung stehen. Die Auswahl der Kameras mit aktiver Beleuchtung wechselt so oft wie erforderlich, bis anhand der Nachbarschaftsbeziehungen die gesamte relative Anordnung der Kameras zueinander bestimmt ist.

Die Erfindung hat den Vorteil, dass die Konfiguration erheblich beschleunigt und vereinfacht wird. Es sind weniger und hinsichtlich der Feststellung der relativen Anordnung gar keine manuellen Schritte erforderlich, außer möglicherweise einfachen Schritten, wie einem Auslösen der entsprechenden Funktion. Dadurch ist die Konfiguration auch erheblich weniger fehleranfällig. Schließlich wird verlässlich und unabhängig von der Erfahrung des Servicetechnikers eine geeignete Konfiguration erreicht, so dass das System leistungsfähiger wird.

Vorzugsweise werden wiederholt Probeaufnahmen erzeugt, während genau eine Kamera alternierend ihre Beleuchtung aktiviert. Noch bevorzugter aktiviert dabei jede Kamera genau einmal ihre Beleuchtung. Ein solches Schema ist besonders einfach und führt verlässlich zum Ziel. Es ist denkbar, dass sich schon eine eindeutige Anordnung ergibt, bevor jede Kamera ihre Beleuchtung aktiviert hat, in diesem Fall kann vorzeitig abgebrochen werden. Das betrifft insbesondere die letzte Kamera, die ihre Beleuchtung noch nicht aktiviert hat, da deren sämtliche Nachbarn zwangsläufig bereits an der Reihe waren. Prinzipiell sind auch ganz andere Schemata vorstellbar, wo zunächst eine bestimmte Anzahl von Kameras ihre Beleuchtung aktiviert und dann beispielsweise erst einmal die Nachbarschaften in einer reduzierten Teilmenge von Kameras geklärt werden, von denen diese Beleuchtung wahrgenommen wurde. Das könnte insbesondere eine Art binärer Baum mit jeweils halbierter Anzahl von Kameras mit aktiver Beleuchtung sein. Da aber gerade nicht bekannt ist, wie die Kameras angeordnet sind, weil dies Herauszufinden erst das Ziel ist, können solche Schemata nicht gut allgemein optimiert werden, und es wird praktisch immer ungünstige Konfigurationen geben, in denen ein komplizierteres Schema gegenüber einer festen Reihenfolge mit jeweils einer aktiven Beleuchtung einer Kamera nur unterlegen ist.

Bevorzugt wird zunächst je Kamera eine lokale Nachbarschaftsbeziehung aus der Information bestimmt, in welcher Richtung gemäß Prüfung der Probeaufnahmen eine Kamera mit aktiver Beleuchtung liegt, und anschließend werden die lokalen Nachbarschaftsbeziehungen zu der relativen Anordnung der Kameras zusammengefasst. Die Kameras oder eine übergeordnete Steuerung stellen somit zunächst lokal fest, in welcher Richtung sich die Kamera mit aktiver Beleuchtung befindet. Das ergibt dann eine vorläufige lokale Nachbarschaftsbeziehung für diese Kamera. In weiteren Durchläufen mit aktiver Beleuchtung anderer Kameras aktualisiert sich diese lokale Nachbarschaftsbeziehung. Nach jedem Satz Probeaufnahmen, nach einer gewissen Anzahl Probeaufnahmen oder einmal am Ende werden diese lokalen Nachbarschaftsbeziehungen gesammelt und verknüpft. Sobald sich daraus eine eindeutige Anordnung ergibt, kann abgebrochen werden. Prinzipiell ist denkbar, die Kameras mit aktiver Beleuchtung für den nächsten Satz Probeaufnahmen von Lücken oder Mehrdeutigkeiten abhängig zu machen, die sich bisher noch in der Anordnung ergeben.

Die Kameras bilden bevorzugt eine Reihenanordnung mit paarweise teilüberlappendem Sichtfeld. Beispielsweise handelt es sich in einem Lesetunnel um eine Reihe von Kameras, die das Förderband von oben her erfassen. Es kann weitere Kameras außerhalb der Reihenanordnung geben, beispielsweise für eine Erfassung von der Seite, von unten oder aus einer schrägen Perspektive. Dann gibt es womöglich mehrere Reihenanordnungen, in denen jeweils die relative Anordnung der Kameras mit dem erfindungsgemäßen Vorgehen herausgefunden werden kann. Eine automatische Konfiguration über alle Kameras ist dann nicht immer möglich, insbesondere wenn die Beleuchtung gar nicht mehr gegenseitig wahrgenommen werden kann. Das erfindungsgemäße Verfahren erleichtert die Konfiguration dennoch erheblich, da nur noch wenige Gruppen und nicht mehr zahlreiche einzelne Kamera zusammengeführt werden müssen.

Zunächst wird bevorzugt je Kamera durch Prüfen der Probeaufnahmen festgestellt, ob sich eine Kamera mit aktiver Beleuchtung rechts, links oder gar nicht in der Nachbarschaft befindet, und die so gewonnenen lokalen Nachbarschafsbeziehungen werden anschließend zu der relativen Anordnung der Kameras zusammengefasst. Das beschreibt das Vorgehen aus dem vorletzten Absatz für den Sonderfall einer Reihenanordnung. Mit dem Vorwissen, dass es jeweils nur rechte und linke Nachbarn beziehungsweise am Rand nur einen Nachbarn gibt, vereinfacht sich das Verfahren erheblich.

Die Kameras sind bevorzugt untereinander baugleich und/oder ursprünglich identisch mit einer Grundeinstellung konfiguriert. Die Kameras unterscheiden sich also ursprünglich nicht, was sowohl die bauliche Ausgestaltung als auch die Einstellungen betrifft, die beispielsweise auf Werkseinstellung gesetzt sind. Vorzugsweise besitzen die Kameras jedoch noch zumindest ein individuelles Merkmal wie eine Seriennummer, das auch der Steuer- und Auswertungseinheit bekannt ist und somit kommuniziert werden kann. Ansonsten gäbe es aber auch Verfahren, mit denen sich jede Kamera ein zufälliges individuelles Merkmal gibt, bei dem anschließend Kollisionen bei dennoch gleichem Merkmal aufgelöst werden. Es ist weiterhin nicht ausgeschlossen, dass die Kameras beispielsweise abwärtskompatible Geräte unterschiedlichen Herstelldatums sind. Auch eine heterogene Anordnung mit unterschiedlichen Kameras ist vorstellbar.

Vorzugsweise erkennt eine automatische Geräteerkennung die im Netzwerk angeschlossenen Kameras. Noch bevorzugter wird eine Kamera als Master bestimmt, wobei das Auswahlkriterium nicht weiter festgelegt ist, beispielsweise die zuerst erkannte Kamera, diejenige mit der kleinsten Seriennummer oder eine zufällige Kamera. Alternativ kann auch eine externe Steuerung die Funktion des Masters übernehmen oder überhaupt eine andere Netzwerkstruktur ohne Master gewählt werden.

Jeder Kamera wird bevorzugt eine vorläufige Netzwerkkonfiguration zugewiesen, insbesondere von einer als Master konfigurierten Kamera. Das ist ein Vorgehen, um initial ein Netzwerk aufzubauen und überhaupt irgendwie mit den Kameras kommunizieren zu können. Diese Erstkonfiguration muss ansonsten noch keine besonderen Anforderungen erfüllen, sondern es werden beispielsweise zufällige oder festgelegte IP-Adressen oder sonstige Adressen je nach Netzwerktechnologie in beliebiger Reihenfolge verteilt. Diese Aufgabe übernimmt vorzugsweise der Master. Es ist denkbar, dass die jeweils angesprochene Kamera ein Zeichen gibt, etwa kurz ihre Beleuchtung aktiviert, damit der Servicetechniker prüfen kann, ob alle Kameras berücksichtigt sind. Dem System ist zu diesem Zeitpunkt die relative Anordnung der Kameras unbekannt.

Den Kameras wird bevorzugt eine neue Netzwerkkonfiguration zugewiesen, die der relativen Anordnung der Kameras zueinander entspricht. Das ist nun kein vorbereitender, sondern ein nachgelagerter Schritt, nachdem die relative Anordnung herausgefunden ist. Die Kameras werden quasi in der richtigen Reihenfolge durchnummeriert. Das erleichtert weitere Konfigurationsschritte sowie eine spätere Wartung. Der Schritt ist dennoch optional, denn es könnte alternativ auch eine Verknüpfung beispielsweise durch Tabellen zwischen einer ursprünglich noch ohne Kenntnis der Anordnung vergebenen Netzwerkkonfiguration und der dann gefundenen Anordnung der Kameras zueinander vorgenommen werden.

Die Kameras nehmen bevorzugt jeweils ein Referenzbild auf, während keine Beleuchtung aktiv ist, und das Referenzbild wird bei der Prüfung von Probeaufnahmen berücksichtigt. Diese Referenzbildaufnahme erfolgt vorzugsweise synchron und somit unter vergleichbaren Umgebungslichtbedingungen. Mit den Referenzbildern kann später besser beurteilt werden, ob und aus welcher Richtung in einer Probeaufnahme die Beleuchtung einer anderen Kamera zu erkennen ist. Beispielsweise wird jeweils ein Differenzbild aus Probeaufnahme und Referenzbild erzeugt.

Die Kameras werden bevorzugt untereinander synchronisiert. Die Synchronisierung steuert nochmals bevorzugt der Master. Eine zumindest nahezu gleichzeitige Probeaufnahme wäre alternativ auch durch ein Triggersignal denkbar, aber weniger präzise. Zudem ist eine Synchronisation der Kameras für den späteren Betrieb von Vorteil.

In den Kameras wird bevorzugt ein individuelles Autokonfigurationsverfahren ausgelöst und durchgeführt. Beispielsweise löst der Master das individuelle Autokonfigurationsverfahren nacheinander in den Kameras aus. Ein jedenfalls teilweise paralleles Autokonfigurieren der Kameras ist auch denkbar. Die Kameras bestimmen dabei beispielsweise ihre eigene Position bezüglich des Erfassungsbereichs anhand von Aufnahmen eines Kalibrierobjekts. Weitere denkbarem Funktionen sind Einstellen der Beleuchtung, eines Fokussystems, Selbsttests und dergleichen.

Die aus den Probeaufnahmen gefundene relative Anordnung der Kameras zueinander wird bevorzugt anhand von Positionsinformationen der Kameras überprüft, die von den Kameras insbesondere aus Aufnahmen eines Kalibrierobjekts gewonnen werden. Dadurch wird abschließend die gefundene Anordnung verifiziert. Im Prinzip könnten die jeweiligen Eigenpositionen von Anfang an verwendet werden, um die relative Anordnung zu bestimmen. Das ist aber nicht so allgemein und robust, beispielsweise wenn eine Kamera nicht zur Eigenpositionsbestimmung in der Lage ist, es kein Kalibrierobjekt gibt oder nicht alle Kameras das Kalibrierobjekt erfassen können. Eine einfache Verifikation kann darin bestehen, dass die Kameras nochmals systematisch nacheinander in der gefundenen Anordnung ihre Beleuchtung aktivieren und so dem Servicetechniker etwaige Fehler leicht erkennbar machen.

Mindestens eine Kamera wird bevorzugt parametriert, wobei in der Kamera Systemparameter unterschieden werden, die eine Bedeutung für alle Kameras haben, und wobei beim Setzen oder Verändern eines Systemparameters in der parametrierten Kamera der Systemparameter in die anderen Kameras übertragen wird. Häufig bedürfen die Kameras noch einer gesonderten Parametrierung, die beispielsweise von der Position innerhalb der Anordnung oder der Perspektive der Kamera abhängt. Dabei gibt es individuelle Parameter nur für diese Kamera und Systemparameter, die in allen Kameras konsistent gesetzt sein müssen. Es gibt beispielsweise intern ein Flag oder eine Tabelle, um Systemparameter als solche zu kennzeichnen. Dem Servicetechniker kann optional mit angezeigt werden, ob es sich um einen Systemparameter handelt. Wird nun ein Systemparameter verändert, so wird diese automatisch an die anderen Kameras übertragen. Das kann direkt oder nach Abschluss der Parametrierung dieser Kamera geschehen. Es ist denkbar, dass der Systemparameter in den anderen Kameras noch individuell angepasst oder umgerechnet wird.

Die Kameras nehmen bevorzugt in einer Betriebsphase nach der automatischen Konfiguration Bilder der Objekte auf und lesen dort angebrachte Codes. Das Codelesen kann innerhalb der Kamera oder in einer übergeordneten Steuerung stattfinden, und zwar wahlweise auf Ebene der Aufnahmen einzelner Kameras oder eines aus diesen Aufnahmen zusammengesetzten Gesamtbildes (Image Stitching). Die Kameras sind bevorzugt als kamerabasierte Codeleser ausgebildet.

In dem erfindungsgemäßen Multikamerasystem sind die Kameras für die Durchführung einer automatischen Konfiguration nach einer Ausführungsform einem der vorhergehenden Ansprüche ausgebildet sind. Das Multikamerasystem bildet vorzugsweise einen Lesetunnel zum Lesen von Codes auf Objekten, die durch den Lesetunnel gefördert werden.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Ansicht einer Kameravorrichtung über einem Förderband mit zu erfassenden Objekten;
- Fig. 2: eine ergänzende Schnittdarstellung von Einzelkameras der Kameravorrichtung samt deren Sichtfeldern;
- Fig. 3: eine Blockdarstellung einer einzelnen Kamera;
- Fig. 4: eine weitere Ansicht einer Kameravorrichtung mit eine Kalibrierobjekt in den Sichtfeldern der Kameras;
- Fig. 5: ein beispielhaftes Ablaufschema für eine automatische Konfiguration;
- Fig. 6-10: eine Illustration der Bestimmung von lokalen Nachbarschaftsbeziehungen durch Probeaufnahmen, während nur eine Kamera ihre Beleuchtung aktiviert; und
- Fig. 11: eine Illustration der abschließend gefundenen relativen Anordnung der Kameras sowie der daraufhin neu vergebenen Netzwerkeinstellung.

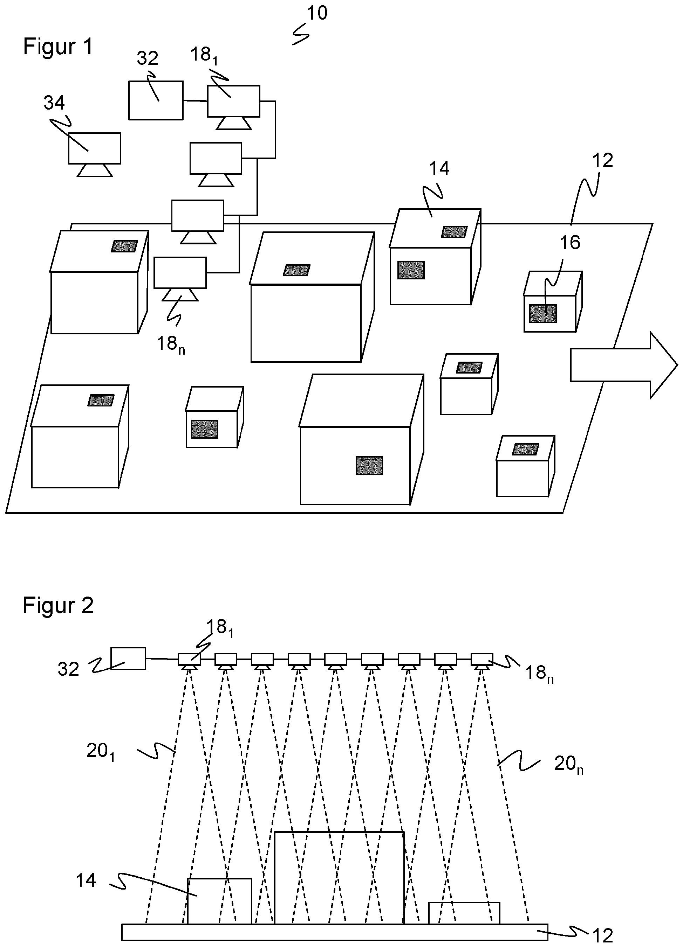

Figur 1 zeigt eine schematische dreidimensionale Ansicht eines Multikamerasystems beziehungsweise einer Kameravorrichtung 10 über einem Förderband 12 mit zu erfassenden Objekten 14, auf denen beispielhaft, aber nicht notwendig Codes 16 angebracht sind. Das Förderband 12 ist ein Beispiel für die Erzeugung eines Stromes von Objekten 14, die sich relativ zu der stationären Kameravorrichtung 10 bewegen. Alternativ kann die Kameravorrichtung 10 auch eine Szenerie ohne Förderband 12 beobachten. Die Kameravorrichtung 10 umfasst mehrere Kameras 18₁..18ₙ, wobei in Figur 1 beispielhaft n=4 gilt. Zusätzlich zu den gezeigten Kameras 18₁..18ₙ in einer Perspektive von oben können weitere Kameras aus anderer Richtung, beispielsweise seitlich montiert sein, um weitere Objektseiten zu erfassen. Eine Reihenanordnung der Kameras 18₁..18ₙ ist bevorzugt, aber auch eine andere Anordnung beispielsweise als Matrix denkbar.

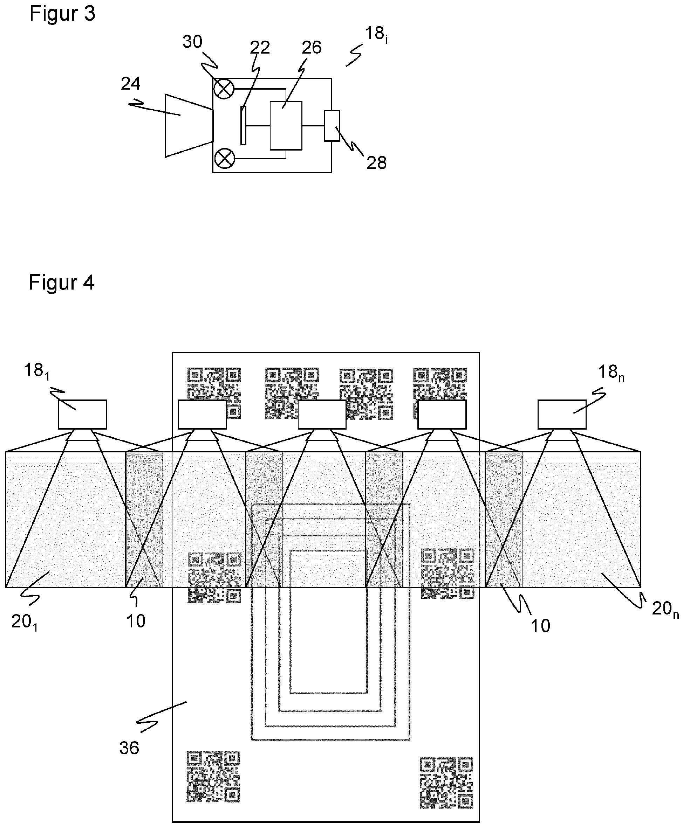

Figur 2 zeigt ergänzend die Anordnung der Kameras 18₁..18ₙ und ihrer Sichtfelder 20₁..20ₙ über dem Förderband 12 in einer Schnittdarstellung, wobei nun ein anderes Beispiel mit mehr Kameras 18₁..18ₙ gewählt ist, und Figur 3 zeigt eine einzelne Kamera 18ᵢ. Die Kameras 18₁..18ₙ weisen jeweils einen Bildsensor 22 mit einer Vielzahl von zu einer Pixelzeile oder einer Pixelmatrix angeordneten Lichtempfangselementen sowie ein Objektiv 24 auf. Eine jeweilige Steuer- und Auswertungseinheit 26 liest Bilddaten aus, ist für kamerabezogene Steuerungsaufgaben und Auswertungen zuständig und ermöglicht über eine Kommunikationsstelle 28 die Anbindung an ein Netzwerk, etwa über Ethernet oder CAN. Weiterhin verfügen die Kameras 18₁..18ₙ über eine Beleuchtung 30, um bei einer Aufnahme das eigene Sichtfeld 20₁..20ₙ auszuleuchten. In dem Netzwerk ist eine übergeordnete Steuerung 32 vorgesehen, deren Aufgaben stattdessen von einer Kamera 18₁..18ₙ übernommen werden können. Die Kameras 18₁..18ₙ sind vorzugsweise untereinander baugleich, um die Systemkomplexität zu verringern. Sie können aber mit unterschiedlichen Konfigurationen und Aufnahmeparametern arbeiten.

In bevorzugter Ausführungsform sind die Kameras 18₁..18ₙ als Codeleser ausgebildet, in denen die Steuer- und Auswertungseinheit 26 zusätzlich als Decodiereinheit zum Auslesen von Codeinformationen und entsprechende Vorverarbeitungen zum Auffinden und Aufbereiten von Codebereichen fungiert. Es ist auch denkbar, Ströme von Objekten 14 ohne Codes 16 zu erfassen und dementsprechend auf die Decodiereinheit selbst oder auf deren Verwendung zu verzichten, beispielsweise zur Inspektion oder Qualitätskontrolle. Außerdem kann eine Decodierung auch nachgelagert außerhalb der Kameras 18₁..18ₙ auf deren Bilddaten erfolgen, insbesondere in der übergeordneten Steuerung 32.

Das Förderband 12 ist zu breit, um von einer einzelnen Kamera 18₁..18ₙ erfasst zu werden. Deshalb ergänzen die Sichtfelder 20₁..20ₙ der Kameras 18₁..18ₙ einander in Querrichtung des Förderbandes 12 unter teilweise gegenseitiger Überlappung. Bezüglich der Bewegungsrichtung des Förderbandes 12 oberhalb der Einzelkameras 18₁..18ₙ ist ein optionaler Geometrieerfassungssensor 34 beispielsweise in Form eines an sich bekannten entfernungsmessenden Laserscanners angeordnet, um vorab die dreidimensionale Kontur der Objekte 14 auf dem Förderband 12 zu vermessen, aus denen sich beispielsweise Abmessungen, Volumen, Position und Form ergeben. Außerdem können die Geometriedaten genutzt werden, um die Aufnahmen auszulösen und die Kameras 18₁..18ₙ zu fokussieren.

Figur 4 zeigt ein weiteres Mal die Anordnung einer Kameravorrichtung 10 mit nun für die weiteren Beispiele fünf Kameras 18₁..18ₙ in einer Vogelperspektive (Top Reading). Im Erfassungsbereich ist ein Kalibrierobjekt 36 angeordnet, das beispielsweise als Box oder als Poster ausgebildet sein kann. Das Kalibrierobjekt 36 weist Codes und sonstige Testmuster bekannter Art und Abmessungen auf und ermöglicht so den Kameras 18₁..18ₙ, diverse Parameter einschließlich einer eigenen Position zu kalibrieren. Die Verwendung eines Kalibrierobjekts 36 ist in vielen Fällen vorteilhaft, für die nun beschriebene Konfiguration aber nicht zwingend erforderlich.

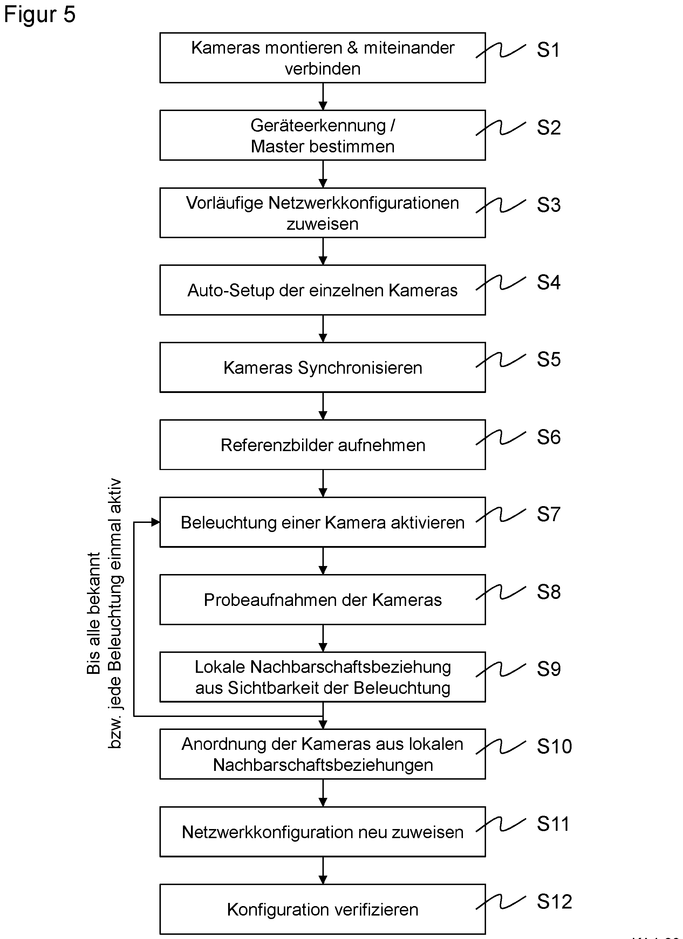

Figur 5 zeigt ein Ablaufschema für eine automatische Konfiguration der Kameravorrichtung 10. Mit diesen Schritten wird eine besonders vorteilhafte automatische Konfiguration erreicht, aber jeder Schritt, der nicht ausdrücklich als unverzichtbar gekennzeichnet wird, ist als optional zu betrachten.

In einem Schritt S1 werden die Kameras 18₁..18ₙ zunächst montiert und physikalisch miteinander verbunden. Im Ausgangszustand sind die Kameras 18₁..18ₙ auf Werkseinstellung mit gleicher Netzwerkeinstellung, also beispielsweise untereinander identischer IP-Adresse und Geräteadresse, die hier als CAN Node ID bezeichnet wird. Die konkrete Ausgestaltung der Netzwerkeinstellung kann variieren und hängt von der verwendeten Netzwerkarchitektur ab. Die Kameras 18₁..18ₙ haben aber vorzugsweise eine eindeutige Seriennummer oder ein sonstiges Merkmal wie eine MAC-Adresse. Ansonsten könnte ein individualisierendes Merkmal auch ausgehandelt werden. Während der Konfiguration ist vorzugsweise ein Konfigurationsrechner angeschlossen, insbesondere an der übergeordneten Steuerung 32, um die Konfiguration zu starten, zu beobachten und gegebenenfalls zu ergänzen oder zu verändern. Es ist aber auch ein Bedienelement an der Kamera 18₁..18ₙ selbst vorstellbar, etwa ein Knopf, der die Konfiguration auslöst.

In einem Schritt S2 werden die angeschlossenen Kameras 18₁..18ₙ zunächst einmal erkannt. Vorzugsweise wird ein Master ausgewählt und konfiguriert, dem eine entsprechende IP-Adresse zugewiesen wird. Der Master steuert dann das weitere Verfahren. Alternativ zu einer Master-Kamera kann auch ein Master in der übergeordneten Steuerung 32 diese Funktion übernehmen. Das Verfahren ist nicht auf eine Master-Slave-Architektur angewiesen, wird aber im Weiteren auf dieser Basis beschrieben.

In einem Schritt S3 weist der Master den übrigen Kameras 18₁..18ₙ eine vorläufige Netzwerkeinstellung zu, wobei beispielsweise eine eindeutige IP-Adresse und eine eindeutige Node ID anhand der jeweiligen Seriennummer bestimmt wird. Durch einen weiteren Netzwerkscan kann ausgeschlossen werden, dass möglicherweise Adressen doppelt vergeben sind. Optional können die Kameras 18₁..18ₙ noch aufgefordert werden, ein Zeichen zu geben, beispielsweise durch Aktivieren ihrer Beleuchtung 30, damit ein Servicetechniker sieht, ob alle Kameras 18₁..18ₙ gefunden und in das Netzwerk eingebunden wurden.

In einem Schritt S4 startet der Master in jeder Kamera 18₁..18ₙ ein individuelles automatisches Setup. Das wird so koordiniert, dass gegenseitige Störungen vermieden werden.

Dazu befindet sich vorzugsweise das zu Figur 4 erläuterte Kalibrierobjekt 36 in den Sichtfeldern 20₁..20ₙ der Kameras 18₁..18ₙ. In dem Setup werden beispielsweise Verzerrungen korrigiert, Schärfeeinstellungen vorgenommen, Pixelgrößen bestimmt sowie Abstände und Winkel zur Kalibrierung der eigenen Lage berechnet. Nach dem automatischen Setup sind insbesondere als Codeleser ausgebildete Kameras 18₁..18ₙ in der Lage, die Codes des Kalibrierobjekts 36 zu lesen und damit möglicherweise weitere Parameter zu setzen.

In einem Schritt S5 startet der Master einen Synchronisationsdienst in allen Kameras 18₁..18ₙ. Das ermöglicht nachfolgend eine synchronisierte Auslösung der Bildaufnahme und der Beleuchtung. Ansonsten könnte es beispielsweise zu Störungen durch gleichzeitiges Blitzlicht geben.

In einem Schritt S6 nehmen alle Kameras 18₁..18ₙ ein Referenzbild bei inaktiver Beleuchtung 30 auf und speichern es für spätere Auswertungen. Das Referenzbild liefert Informationen über die Umgebungslichtsituation und wird beispielsweise später berücksichtigt, indem es von weiteren Aufnahmen abgezogen wird.

In den Schritten S7 bis S10 finden die Kameras 18₁..18ₙ selbsttätig ihre relative Anordnung zueinander. In einem Schritt S7 aktiviert nur eine Kamera 18₁..18ₙ ihre Beleuchtung 30. Alle Kameras 18₁..18ₙ, möglicherweise mit Ausnahme derjenigen mit aktiver Beleuchtung 30, erzeugen in einem Schritt S8 eine Probeaufnahme. Durch Auswertung der Probeaufnahme wird in einem Schritt S9 festgestellt, in welcher Richtung sich die Kamera 18₁..18ₙ mit der aktiven Beleuchtung 30 befindet. Dabei wird das Referenzbild berücksichtigt, um Umgebungsartefakte auszuschließen. In einer Reihenanordnung ist nur zwischen links und rechts zu unterscheiden, wobei gegebenenfalls noch durch Vergleich des Ausmaßes der Beleuchtung unterschieden werden kann, ob es der nächste oder ein weiter entfernter Nachbar ist. Somit werden aus der Sichtbarkeit der Beleuchtung lokale Nachbarschaftsbeziehungen der Kameras 18₁..18ₙ abgeleitet. Die Schritte S7 bis S9 werden wiederholt, bis jede Kamera 18₁..18ₙ einmal mit Aktivierung ihrer Beleuchtung 30 an der Reihe war.

In einem Schritt S10 werden abschließend die lokalen Nachbarschaftsbeziehungen vom Master eingesammelt und kombiniert. Dadurch entsteht dann eine endgültige oder globale Nachbarschaftsbeziehung, beziehungsweise die gesuchte relative Anordnung der Kameras 18₁..18ₙ zueinander ist nun bekannt. Dieser Schritt kann vorgezogen werden, um nach jedem Durchlauf der Schritte S7 bis S9 zu entscheiden, ob die relative Anordnung der Kameras 18₁..18ₙ bereits eindeutig feststeht und die Schleife abgebrochen werden kann.

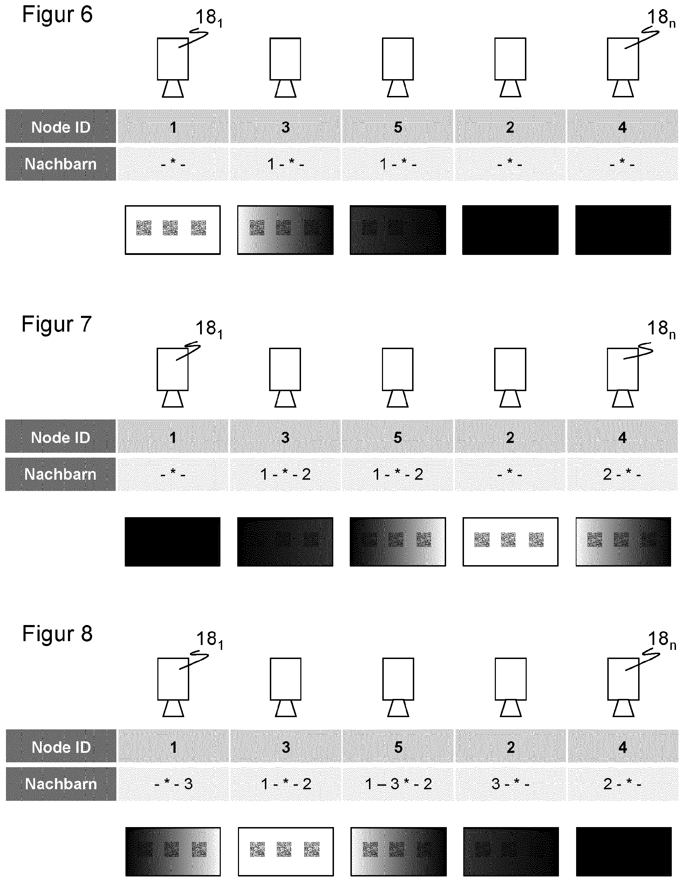

Die Schritte S7 bis S10 sind in den Figuren 6 bis 10 illustriert und werden nochmals näher erläutert. Figur 6 zeigt Probeaufnahmen, während der Master selbst, also die Kamera 18₁ mit Node ID 1, seine Beleuchtung 30 aktiviert. Diese Reihenfolge ist nicht zwingend, es kann auch eine andere Kamera 18₁..18ₙ beginnen, und der Master könnte umgekehrt auch eine andere Kamera 18₁..18ₙ sein. Zu beachten ist, dass den Kameras 18₁..18ₙ in dieser Phase ungeordnete Node IDs und ebenso sonstige Netzwerkeinstellungen wie IP-Adressen und dergleichen zugewiesen sind. Die physische Anordnung ist noch nicht bekannt, die Verteilung der vorläufigen Netzwerkeinstellungen ist effektiv zufällig und hier beispielhaft als Reihenfolge 1-3-5-2-4 angegeben. Diese Reihenfolge herauszufinden ist Ziel der Schritte S7 bis S10. Durch die in Figur 6 illustrierten ersten Probeaufnahmen stellen die Kameras mit Node ID 3 und 5 fest, dass sich die Kamera mit Node ID 1 links von ihnen befindet.

Figur 7 zeigt Probeaufnahmen, während die Kamera mit Node ID 2 ihre Beleuchtung 30 aktiviert. Die Kameras mit Node ID 3 und 5 stellen anhand ihrer Probeaufnahmen fest, dass sich die Kamera mit Node ID 2 rechts befindet. Durch Vergleich der Probeaufnahmen untereinander ließe sich zusätzlich feststellen, dass die Kameras mit Node ID 3 und 2 keine direkten Nachbarn sind. Die Kamera mit Node ID 4 erkennt die Kamera mit Node ID 2 als linken Nachbarn.

Figur 8 zeigt Probeaufnahmen, während die Kamera mit Node ID 3 ihre Beleuchtung 30 aktiviert. Die Kamera mit Node ID 3 wird als rechter Nachbar der Kamera mit Node ID 1 und als linker Nachbar der Kameras mit Node ID 5 und 2 erkannt. Nach diesem Durchlauf wäre die Konfiguration bereits eindeutig erkannt und die Schleife könnte abgebrochen werden.

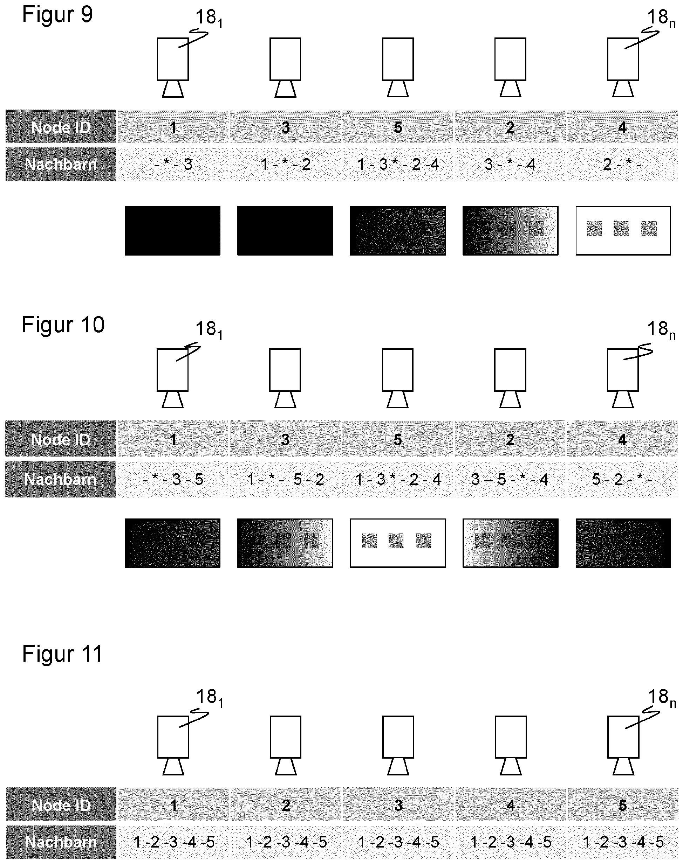

Figur 9 zeigt dennoch der Vollständigkeit halber Probeaufnahmen, während die letzte verbleibende Kamera mit Node ID 5 ihre Beleuchtung 30 aktiviert. Die Kamera mit Node ID 5 wird als rechter Nachbar der Kameras mit Node ID 1 und 3 sowie als linker Nachbar der Kameras mit Node ID 5 und 2 erkannt.

Nachdem nun die relative Anordnung der Kameras 18₁..18ₙ bekannt ist, können in einem Schritt S11 neue Netzwerkkonfigurationen verteilt werden, damit physische und logische Anordnung einander entsprechen. Dieser Schritt ist für die Funktionalität nicht erforderlich, da die Zuordnung auch auf andere Weise gewährleistet werden kann, erleichtert aber die weitere Handhabung beispielsweise bei späterem Gerätetausch.

Figur 11 illustriert das Ergebnis. Den Kameras sind nun Node IDs zugewiesen, die der Reihenfolge in der Zeilenanordnung entsprechen. Die ursprüngliche effektiv zufällige Nachbarschaft 1-3-5-2-4 ist nun eine geordnete Nachbarschaft 1-2-3-4-5.

In einem abschließenden Schritt S12 kann die Konfiguration nochmals verifiziert werden. Das kann den Servicetechniker einbeziehen, indem beispielsweise die Kameras 18₁..18ₙ nacheinander ihre Beleuchtungen 30 aktivieren. Falls die Kameras im Schritt S4 ihre eigene Position ermittelt haben, können diese Positionen mit der im Schritt S10 gefundenen relativen Anordnung abgeglichen werden. Außerdem kann nochmals ein Nerzwerkscan durchgeführt werden, um auf doppelt vergebene IP-Adressen und dergleichen zu prüfen.

Im Anschluss werden vorzugsweise die einzelnen Kameras 18₁..18ₙ noch individuell parametriert. Dabei werden teilweise auch Systemparameter gesetzt oder verändert, die nicht nur für die aktuell parametrierte Kamera 18₁..18ₙ von Bedeutung sind, sondern auch für die anderen Kameras 18₁..18ₙ. Diese Information muss über die Kameravorrichtung 10 hinweg konsistent gehalten werden.

Dazu sind in einer Ausführungsform die Systemparameter als solche bekannt, beispielsweise durch ein entsprechendes Flag oder eine Tabelle, die für jeden Parameter festlegt, ob es sich um einen Systemparameter handelt oder nicht. Betrifft eine Konfiguration einen Systemparameter, so wird das auf die erforderlichen anderen Kameras 18₁..18ₙ übertragen, und zwar wahlweise sofort oder nach Abschluss der Konfiguration einer Kamera 18₁..18ₙ. Diese Information, ob es sich um einen Systemparameter handelt beziehungsweise dass dieser nun auch auf die andren Kameras 18₁..18ₙ überspielt wird, kann dem Servicetechniker angezeigt werden, muss aber nicht, da sich die Kameravorrichtung 10 selbst im Hintergrund darum kümmert, Systemparameter konsistent zu verteilen.

Somit kann der Servicetechniker die Kameravorrichtung 10 durch Einstellungen an den einzelnen Kameras 18₁..18ₙ optimieren, ohne sich darum Gedanken machen zu müssen, dass die Systemparameter über die Kameravorrichtung 10 konsistent bleiben. Der Servicetechniker muss nicht einmal wissen, welche Parameter solche Systemparameter sind, die auch den anderen Kameras 18₁..18ₙ mitzuteilen sind.

## Patentansprüche

1. Verfahren zur automatischen Konfiguration einer Vielzahl von Kameras (18₁..18ₙ), die jeweils einen Bildsensor (22), eine Beleuchtung (30) und eine Kommunikationsschnittstelle (28) aufweisen und durch teilüberlappende, einander ergänzende Sichtfelder (20₁..20ₙ) gemeinsam Objekte (14) in einem Erfassungsbereich aufnehmen, insbesondere einen Strom von durch den Erfassungsbereich geförderten Objekten (14), wobei die Kameras (18₁..18ₙ) über ihre Kommunikationsschnittstellen (28) zu einem Netzwerk verbunden sind, **dadurch gekennzeichnet,**
**dass** die Kameras (18₁..18ₙ) Probeaufnahmen erzeugen, während nur bestimmte Kameras (18₁..18ₙ) ihre Beleuchtung (30) aktivieren, dass für die jeweiligen Kameras (18₁..18ₙ) anhand der Probeaufnahmen geprüft wird, ob eine Nachbarschaftsbeziehung zu einer Kamera (18₁..18ₙ) mit aktiver Beleuchtung (30) besteht, und dass aus den Nachbarschaftsbeziehungen die relative Anordnung der Kameras (18₁..18ₙ) zueinander bestimmt wird.

2. Verfahren nach Anspruch 1,
wobei wiederholt Probeaufnahmen erzeugt werden, während genau eine Kamera (18₁..18ₙ) alternierend ihre Beleuchtung (30) aktiviert.

3. Verfahren nach Anspruch 1 oder 2,
wobei zunächst je Kamera (18₁..18ₙ) eine lokale Nachbarschaftsbeziehung aus der Information bestimmt wird, in welcher Richtung gemäß Prüfung der Probeaufnahmen eine Kamera (18₁..18ₙ) mit aktiver Beleuchtung liegt, und wobei anschließend die lokalen Nachbarschaftsbeziehungen zu der relativen Anordnung der Kameras (18₁..18ₙ) zusammengefasst werden.

4. Verfahren nach einem der vorhergehenden Ansprüche,
wobei die Kameras (18₁..18ₙ) eine Reihenanordnung mit paarweise teilüberlappendem (20₁..20ₙ) Sichtfeld bilden.

5. Verfahren nach Anspruch 3,
wobei zunächst je Kamera (18₁..18ₙ) durch Prüfen der Probeaufnahmen festgestellt wird, ob sich eine Kamera (18₁..18ₙ) mit aktiver Beleuchtung (30) rechts, links oder gar nicht in der Nachbarschaft befindet, und wobei die so gewonnenen lokalen Nachbarschafsbeziehungen anschließend zu der relativen Anordnung der Kameras (18₁..18ₙ) zusammengefasst werden.

6. Verfahren nach einem der vorhergehenden Ansprüche,
wobei die Kameras (18₁..18ₙ) untereinander baugleich und/oder ursprünglich identisch mit einer Grundeinstellung konfiguriert sind.

7. Verfahren nach einem der vorhergehenden Ansprüche,
wobei eine automatische Geräteerkennung die im Netzwerk angeschlossenen Kameras (18₁..18ₙ) erkennt und insbesondere eine Kamera (18₁..18ₙ) als Master bestimmt.

8. Verfahren nach einem der vorhergehenden Ansprüche,
wobei jeder Kamera (18₁..18ₙ) eine vorläufige Netzwerkkonfiguration zugewiesen wird, insbesondere von einer als Master konfigurierten Kamera (18₁..18ₙ).

9. Verfahren nach einem der vorhergehenden Ansprüche,
wobei den Kameras (18₁..18ₙ) eine neue Netzwerkkonfiguration zugewiesen wird, die der relativen Anordnung der Kameras (18₁..18ₙ) zueinander entspricht.

10. Verfahren nach einem der vorhergehenden Ansprüche,
wobei die Kameras (18₁..18ₙ) jeweils ein Referenzbild aufnehmen, während keine Beleuchtung (30) aktiv ist, und das Referenzbild bei der Prüfung von Probeaufnahmen berücksichtigt wird.

11. Verfahren nach einem der vorhergehenden Ansprüche,
wobei die Kameras (18₁..18ₙ) synchronisiert werden und/oder wobei in den Kameras (18₁..18ₙ) ein individuelles Autokonfigurationsverfahren ausgelöst und durchgeführt wird, mit dem insbesondere die eigene Position bezüglich des Erfassungsbereichs anhand von Aufnahmen eines Kalibrierobjekts (36) festgestellt wird.

12. Verfahren nach einem der vorhergehenden Ansprüche,
wobei die aus den Probeaufnahmen gefundene relative Anordnung der Kameras (18₁..18ₙ) zueinander anhand von Positionsinformationen der Kameras (18₁..18ₙ) überprüft wird, die von den Kameras (18₁..18ₙ) insbesondere aus Aufnahmen eines Kalibrierobjekts (36) gewonnen werden.

13. Verfahren nach einem der vorhergehenden Ansprüche,
wobei mindestens eine Kamera (18₁..18ₙ) parametriert wird, wobei in der Kamera (18₁..18ₙ) Systemparameter unterschieden werden, die eine Bedeutung für alle Kameras (18₁..18ₙ) haben, und wobei beim Setzen oder Verändern eines Systemparameters in der parametrierten Kamera (18₁..18ₙ) der Systemparameter in die anderen Kameras (18₁..18ₙ) übertragen wird.

14. Verfahren nach einem der vorhergehenden Ansprüche,
wobei die Kameras (18₁..18ₙ) in einer Betriebsphase nach der automatischen Konfiguration Bilder der Objekte (14) aufnehmen und dort angebrachte Codes (16) lesen.

15. Multikamerasystem (10) mit einer Vielzahl von Kameras (18₁..18ₙ), insbesondere Lesetunnel zum Lesen von Codes (16) auf Objekten (12), die durch den Lesetunnel gefördert werden, wobei die Kameras (18₁..18ₙ) jeweils einen Bildsensor (22), eine Beleuchtung (30) und eine Kommunikationsschnittstelle (28) aufweisen und die derart montiert sind, dass sie durch teilüberlappende, einander ergänzende Sichtfelder (20₁..20ₙ) gemeinsam Objekte (14) in einem Erfassungsbereich aufnehmen, wobei die Kameras (18₁..18ₙ) über ihre Kommunikationsschnittstellen (28) zu einem Netzwerk verbunden sind,
**dadurch gekennzeichnet,**
**dass** die Kameras (18₁..18ₙ) für die Durchführung einer automatischen Konfiguration nach einem der vorhergehenden Ansprüche ausgebildet sind.

## Claims

1. A method for automatically configuring a plurality of cameras (18₁..18ₙ), each comprising an image sensor (22), an illumination (30) and a communication interface (28) and, by means of partially overlapping, complementary fields of view (20₁..20ₙ), jointly recording objects (14) in a detection area, in particular a stream of objects (14) conveyed through the detection area, the cameras (18₁..18ₙ) being connected via their communication interfaces (28) to form a network,
**characterized in that** the cameras (18₁..18ₙ) generate test images while only certain cameras (18₁..18ₙ) activate their illumination (30), **in that** for the respective cameras (18₁..18ₙ) it is checked on the basis of the test images whether there is a neighborhood relationship to a camera (18₁..18ₙ) with active illumination (30), and **in that** the relative arrangement of the cameras (18₁..18ₙ) to one another is determined from the neighborhood relationships.

2. The method according to claim 1,
wherein test images are repeatedly generated while exactly one camera (18₁..18ₙ) alternately activates its illumination (30).

3. The method according to claim 1 or 2,
wherein firstly a local neighborhood relationship is determined for each camera (18₁..18ₙ) from the information in which direction a camera (18₁..18ₙ) with active illumination is located according to the checking of the test images, and wherein subsequently the local neighborhood relationships are combined to form the relative arrangement of the cameras (18₁..18ₙ).

4. The method according to any of the preceding claims,
wherein the cameras (18₁..18ₙ) form a line arrangement with a paired partially overlapping (20₁..20ₙ) field of view.

5. The method according to claim 3,
wherein firstly it is determined for each camera (18₁..18ₙ) by checking the test images whether a camera (18₁..18ₙ) with active illumination (30) is located to the right, to the left or not at all in the neighborhood, and wherein the local neighborhood relationships thus obtained are subsequently combined to form the relative arrangement of the cameras (18₁..18ₙ).

6. The method according to any of the preceding claims,
wherein the cameras (18₁..18ₙ) are of a same type and/or are originally configured identically with a basic setting.

7. The method according to any of the preceding claims,
wherein an automatic device recognition recognizes the cameras (18₁..18ₙ) connected in the network and determines in particular one camera (18₁..18ₙ) as a master.

8. The method according to any of the preceding claims,
wherein a preliminary network configuration is assigned to each camera (18₁..18ₙ), in particular from a camera (18₁..18ₙ) configured as a master.

9. The method according to any of the preceding claims,
wherein the cameras (18₁..18ₙ) are assigned a new network configuration corresponding to the relative arrangement of the cameras (18₁..18ₙ) with respect to one another.

10. The method according to any of the preceding claims,
wherein the cameras (18₁..18ₙ) each capture a reference image while no illumination (30) is active, and the reference image is taken into account when checking test images.

11. The method according to any of the preceding claims,
wherein the cameras (18₁..18ₙ) are synchronized and/or wherein an individual autoconfiguration procedure is triggered and carried out in the cameras (18₁..18ₙ), by means of which, in particular, the own position with respect to the detection area is determined on the basis of images of a calibration object (36).

12. The method according to any of the preceding claims,
wherein the relative arrangement of the cameras (18₁..18ₙ) to one another found from the test images is checked using position information of the cameras (18₁..18ₙ) that is obtained by the cameras (18₁..18ₙ), in particular from images of a calibration object (36).

13. The method according to any of the preceding claims,
wherein at least one camera (18₁..18ₙ) is parameterized, wherein system parameters are distinguished in the camera (18₁..18ₙ) which have a meaning for all cameras (18₁..18ₙ), and wherein when a system parameter is set or changed in the parameterized camera (18₁..18ₙ), the system parameter is transferred to the other cameras (18₁..18ₙ).

14. The method according to any of the preceding claims,
wherein the cameras (18₁..18ₙ), in an operating phase after the automatic configuration, take images of the objects (14) and read codes (16) applied to the objects (14).

15. A multi-camera system (10) having a plurality of cameras (18₁..18ₙ), in particular a reading tunnel for reading codes (16) on objects (12) which are conveyed through the reading tunnel, the cameras (18₁..18ₙ) each comprising an image sensor (22), an illumination (30) and a communication interface (28) and being mounted in such a way that they jointly record objects (14) in a detection area by means of partially overlapping, complementary fields of view (20₁..20ₙ), the cameras (18₁..18ₙ) being connected to a network via their communication interfaces (28),
**characterized in that** the cameras (18₁..18ₙ) are configured to perform an automatic configuration according to any of the preceding claims.

## Revendications

1. Procédé de configuration automatique d'une pluralité de caméras (18₁ .. 18ₙ) qui comprennent chacune un capteur d'images (22), un éclairage (30) et une interface de communication (28) et qui, par des champs de vision (20₁ .. 20ₙ) se chevauchant partiellement et se complétant mutuellement, enregistrent ensemble des objets (14) dans une zone de détection, en particulier un flux d'objets (14) transportés à travers la zone de détection, les caméras (18₁ .. 18ₙ) étant reliées en un réseau par l'intermédiaire de leurs interfaces de communication (28),
**caractérisé en ce que**
les caméras (18₁ .. 18ₙ) produisent des prises de vue d'essai alors que seulement certaines caméras (18₁ .. 18ₙ) activent leur éclairage (30), **en ce que**, pour les caméras respectives (18₁ .. 18ₙ), on vérifie à l'aide des prises de vue d'essai s'il existe une relation de voisinage avec une caméra (18₁ .. 18ₙ) à éclairage actif (30), et **en ce que** l'on définit, à partir des relations de voisinage, la disposition relative des caméras (18₁ .. 18ₙ) les unes par rapport aux autres.

2. Procédé selon la revendication 1,
dans lequel des prises de vue d'essai sont produites de manière répétée alors que précisément une caméra (18₁ .. 18ₙ) active en alternance son éclairage (30).

3. Procédé selon la revendication 1 ou 2,
dans lequel on détermine d'abord pour chaque caméra (18₁ .. 18ₙ) une relation de voisinage locale à partir de l'information de savoir dans quelle direction se trouve une caméra (18₁ .. 18ₙ) à éclairage actif, selon la vérification des prises de vue d'essai, et on regroupe ensuite les relations de voisinage locales pour donner la disposition relative des caméras (18₁ .. 18ₙ).

4. Procédé selon l'une des revendications précédentes,
dans lequel les caméras (18₁ .. 18ₙ) forment une disposition en série à champ de vision (20₁ ... 20ₙ) se chevauchant partiellement par paire.

5. Procédé selon la revendication 3,
dans lequel, en vérifiant les prises de vue d'essai, on détermine d'abord pour chaque caméra (18₁ .. 18ₙ) si une caméra (18₁ .. 18ₙ) à éclairage actif (30) se trouve à droite, à gauche ou pas du tout dans le voisinage, et on regroupe ensuite les relations de voisinage locales ainsi obtenues pour donner la disposition relative des caméras (18₁ .. 18ₙ).

6. Procédé selon l'une des revendications précédentes,
dans lequel les caméras (18₁ .. 18ₙ) sont de construction identique entre elles et/ou sont configurées initialement de manière identique avec un réglage de base.

7. Procédé selon l'une des revendications précédentes,
dans lequel une reconnaissance automatique d'appareils reconnaît les caméras (18₁ .. 18ₙ) raccordées en réseau et définit en particulier une caméra (18₁ .. 18ₙ) comme maître.

8. Procédé selon l'une des revendications précédentes,
dans lequel une configuration réseau provisoire est attribuée à chaque caméra (18₁ .. 18ₙ), en particulier par une caméra (18₁ .. 18ₙ) configurée comme maître.

9. Procédé selon l'une des revendications précédentes,
dans lequel une nouvelle configuration réseau est attribuée aux caméras (18₁ .. 18ₙ), laquelle correspond à la disposition relative des caméras (18₁ .. 18ₙ) les unes par rapport aux autres.

10. Procédé selon l'une des revendications précédentes,
dans lequel les caméras (18₁ .. 18ₙ) prennent chacune une image de référence alors qu'aucun éclairage (30) n'est actif, et l'image de référence est prise en compte lors de la vérification de prises de vue d'essai.

11. Procédé selon l'une des revendications précédentes,
dans lequel les caméras (18₁ .. 18ₙ) sont synchronisées, et/ou un procédé d'auto-configuration individuel est déclenché et exécuté dans les caméras (18₁ .. 18ₙ), permettant de déterminer en particulier la propre position par rapport à la zone de détection à l'aide de prises de vue d'un objet de calibrage (36).

12. Procédé selon l'une des revendications précédentes,
dans lequel la disposition relative des caméras (18₁ .. 18ₙ) les unes par rapport aux autres, trouvée à partir des prises de vue d'essai, est vérifiée à l'aide d'informations de position des caméras (18₁ .. 18ₙ) qui sont obtenues par les caméras (18₁ .. 18ₙ) en particulier à partir de prises de vue d'un objet de calibrage (36).

13. Procédé selon l'une des revendications précédentes,
dans lequel au moins une caméra (18₁ .. 18ₙ) est paramétrée, des paramètres système sont distingués dans la caméra (18₁ .. 18ₙ), qui ont une signification pour toutes les caméras (18₁ .. 18ₙ), et lors de la définition ou de la modification d'un paramètre système dans la caméra paramétrée (18₁ .. 18ₙ), le paramètre système est transmis aux autres caméras (18₁ .. 18ₙ).

14. Procédé selon l'une des revendications précédentes,
dans lequel, dans une phase de fonctionnement suivant la configuration automatique, les caméras (18₁ .. 18ₙ) prennent des images des objets (14) et lisent des codes (16) qui y sont apposés.

15. Système multi-caméras (10) comprenant une pluralité de caméras (18₁ .. 18ₙ), en particulier des tunnels de lecture pour lire des codes (16) sur des objets (12) qui sont transportés à travers le tunnel de lecture, dans lequel les caméras (18₁ .. 18ₙ) comprennent chacune un capteur d'images (22), un éclairage (30) et une interface de communication (28), et sont montées de manière à enregistrer ensemble des objets (14) dans une zone de détection par des champs de vision (20₁ .. 20ₙ) qui se chevauchent partiellement et se complètent mutuellement, les caméras (18₁ .. 18ₙ) sont reliées en un réseau par l'intermédiaire de leurs interfaces de communication (28), **caractérisé en ce que**
les caméras (18₁ .. 18ₙ) sont réalisées pour mettre en œuvre une configuration automatique selon l'une des revendications précédentes.
